(19) Europäisches Patentamt
European Patent Office
Office européen des brevets

(11) **EP 2 146 326 B1**

(12) **EUROPÄISCHE PATENTSCHRIFT**

(45) Veröffentlichungstag und Bekanntmachung des Hinweises auf die Patenterteilung:
**25.03.2015  Patentblatt 2015/13**

(51) Int Cl.:
***G07C 5/08*** *(2006.01)*

(21) Anmeldenummer: **09165150.5**

(22) Anmeldetag: **10.07.2009**

(54) **Vorrichtung für ein Kraftfahrzeug zur Erfassung der Verwendung einer Geschwindigkeitsregelanlage, sowie entsprechendes Kraftfahrzeug und Verfahren**

Device for a powered vehicle to record the use of a speed control device, corresponding powered vehicle and method

Dispositif pour un véhicule automobile destiné à la détermination de l'utilisation d'une installation de réglage de la vitesse ainsi que véhicule automobile correspondant et procédé

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **16.07.2008   DE 102008034188**

(43) Veröffentlichungstag der Anmeldung:
**20.01.2010   Patentblatt 2010/03**

(60) Teilanmeldung:
**15154792.4**

(73) Patentinhaber: **HR Instrument Services GmbH
4144 Arlesheim (CH)**

(72) Erfinder: **Hofer, Rainer
79541 Lörrach (DE)**

(74) Vertreter: **Witte, Weller & Partner Patentanwälte mbB
Postfach 10 54 62
70047 Stuttgart (DE)**

(56) Entgegenhaltungen:
WO-A1-2007/139493      WO-A1-2008/033079
US-A- 6 092 021      US-A- 6 134 489
US-A1- 2002 022 920

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Kraftfahrzeuge sind in der heutigen Zeit aus dem täglichen Leben nicht mehr wegzudenken. Waren Kraftfahrzeuge, insbesondere Automobile, im ausgehenden 19. Jahrhundert noch eine exotische Erscheinung, stellt die große Flexibilität, Personen und Waren mittels Kraftfahrzeugen bewegen zu können, einen entscheidenden Faktor im wirtschaftlichen Gesamtgefüge dar. So sind jeden Tag die Mehrheit der Berufstätigen auf Kraftfahrzeuge angewiesen, die Beförderung von Waren des täglichen Bedarfs erfolgt fast ausschließlich mit Kraftfahrzeugen, und bei der Wahrnehmung von hoheitlichen Aufgaben (zum Beispiel Polizei, Feuerwehr, Katastrophenschutz) ermöglichen erst Kraftfahrzeuge eine schnelle Reaktionszeit.

Der anhaltende Trend beim ansteigenden Grad der Motorisierung, insbesondere beim Individualverkehr, bringt jedoch nicht nur Vorteile. Die Anzahl der Kraftfahrzeuge weltweit hat sich in den letzten zehn Jahren auf ca. 800 Millionen Fahrzeuge erhöht, wovon sich alleine in Deutschland knapp 60 Millionen Fahrzeuge befinden. Trotz der fortlaufend ansteigenden Rohstoffpreise ist dennoch keine Umkehr des Trends zu erkennen. Vielmehr gehen einige Schätzungen davon aus, dass die weltweite Anzahl an Fahrzeugen in den nächsten zehn Jahren auf 1 Milliarde steigen könnte.

Abgesehen von den Schadstoffbelastungen und dem erheblichen Verbrauch von Ressourcen stellen auch Verkehrsunfälle eine der Kehrseiten des hohen Motorisierungsgrads dar. Schätzungen gehen davon aus, dass weltweit ca. 1 Million Menschen jährlich weltweit bei Verkehrsunfällen sterben und dass 50 Millionen Menschen jährlich weltweit bei Unfällen verletzt werden.

Schließlich soll im Zusammenhang mit dem steigenden Motorisierungsgrad der Aspekt der Bildung von Staus angesprochen werden. Hier weiß man aus aktuellen Beobachtungen, dass gerade in Ballungsräumen immer längere Strecken in immer größer werdenden Zeitfenstern als staugefährdet eingestuft werden müssen. Staus verursachen einen erheblichen wirtschaftlichen Schaden, der allein in Deutschland mit jährlich über 100 Milliarden Euro veranschlagt wird. Da ein nennenswerter Faktor dieser Kosten allein durch den zusätzlichen Verbrauch an Kraftstoff hervorgerufen wird, steigt der volkswirtschaftliche Schaden nicht nur durch die erhöhte Stauhäufigkeit, sondern auch durch die ständig ansteigenden Rohstoffkosten.

Es hat in der Vergangenheit Bemühungen gegeben, den Individualverkehr zu reduzieren und über gemeinschaftliche Verkehrsmittel abzuwickeln. Die Erfahrung hat jedoch gezeigt, dass der Individualverkehr an sehr vielen Stellen des wirtschaftlichen Gefüges verankert ist und dass der Individualverkehr trotz derartiger Maßnahmen im Wesentlichen unverändert geblieben ist. Trotz dieser Erkenntnisse beschränken sich heutige Lösungsansätze im Wesentlichen darauf, eine Veränderung des Individualverkehrs zu bewirken.

US 6,134,489 offenbart eine Vorrichtung, die es Kraftfahrern ermöglichen soll, Verwarnungen wegen Geschwindigkeitsübertretungen zu bestreiten, wenn diese ungerechtfertigt ausgestellt wurden. Die Vorrichtung weist eine elektronische Schnittstelle innerhalb des Fahrzeugs auf, die die letzte Einstellung der Geschwindigkeitsregelanlage des Fahrzeugs registriert und speichert. Des Weiteren können Daten, die das Datum, die Zeit der Aktivierung, die Zeit der Deaktivierung und eine Identifikationsnummer des Fahrzeugs gespeichert werden.

US 6,092,021 offenbart ein Überwachungs- und Anzeigesystem für eine Kraftstoffeffizienz beim Betrieb eines Kraftfahrzeugs. Das System wertet Parameter bezüglich des Fahrzeugbetriebs aus, um Zustände zu erkennen, die zu einem überhöhten Kraftstoffverbrauch führen. Zu solchen Zuständen gehören eine zu hohe Geschwindigkeit, eine hohe Drehzahl, Bremsen und Beschleunigen, ausdauernder Leerlauf und schnelle Bewegungen des Gaspedals. Das System schätzt dynamisch das Gewicht des Fahrzeugs, die Straßengüte und den Widerstandsbeiwert und verwendet diese Schätzungen, um eine ineffiziente Nutzung von Kraftstoff zu erkennen. Das System zeigt es dem Fahrer an, wenn eine ineffiziente Kraftstoffnutzung erkannt wird.

US 2002/0022920 A1 beschreibt ein Verfahren und eine Vorrichtung zum Speichern, Zugreifen, Erzeugen und Verwenden von Informationen über Geschwindigkeitsbeschränkungen und Radarfallen unter Verwendung von GPS-Informationen. Auf Basis der Positionsinformation wird auf eine Datenbank zugegriffen, die Geschwindigkeitsbeschränkungen und Radarfallen beinhaltet. Erkannte Radarfallen können über einen Knopfdruck festgehalten werden. Die Position der Radarfalle und Informationen über Datum und Zeit werden an die Datenbank übertragen. Die Information über die Geschwindigkeitsbeschränkung kann verwendet werden, um die Geschwindigkeit des Automobils in Zusammenhang mit einer Geschwindigkeitsregelanlage zu steuern.

WO 2007/139493 A1 beschreibt eine Vorrichtung, die bewerten kann, ob ein Fahrer vorausschauend fährt oder nicht. Um dies zu bewerten, wird eine Zeit ermittelt, die zwischen einem Bremsvorgang und einem Beschleunigungsvorgang oder zwischen einem Beschleunigungsvorgang und einem Bremsvorgang liegt. Unterschreitet diese Zeit eine vorgegebenen Referenzwert, so wird die Fahrweise als nicht vorausschauend bewertet. Wird der Referenzwezt überschritten, so wird die Fahrweise als vorausschauend bewertet.

Es ist eine Aufgabe der vorliegenden Erfindung, ein zukunftsweisendes Konzept aufzuzeigen, welches den existierenden Individualverkehr mit Kraftfahrzeugen im Wesentlichen als gegebene Größe ansieht und dennoch eine Verbesserung bezüglich der oben genannten Probleme bietet.

Gemäß einem Aspekt der vorliegenden Erfindung wird eine Vorrichtung für ein Kraftfahrzeug zur Erfassung der Verwendung einer Geschwindigkeitsregelanlage des Kraftfahrzeugs nach Anspruch 1 vorgeschlagen.

Die Aufgabe wird ferner durch ein Kraftfahrzeug mit einer derartigen Vorrichtung gelöst.

Schließlich wird die Aufgabe auch durch ein Verfahren zur Erfassung der Verwendung einer Geschwindigkeitsregelanlage eines Kraftfahrzeugs nach Anspruch 13 gelöst.

Im Rahmen der Erfindung wurde erkannt, dass die Erfassung der Verwendung einer Geschwindigkeitsregelanlage eines Kraftfahrzeugs eine wichtige Grundlage liefert, um die eingangs genannten Probleme zu lösen oder zu entschärfen. Während die Geschwindigkeitsregelanlage, teilweise auch als Tempomat bezeichnet und teilweise auch mit einer automatischen Abstandsregelung verbunden, gemäß dem Verständnis im Stand der Technik als Komfortmerkmal eines Kraftfahrzeugs angesehen wird, beschreitet die Erfindung einen völlig neuen Weg.

Die Geschwindigkeitsregelanlage, insbesondere die Information über die Verwendung der Geschwindigkeitsregelanlage im Verlauf der Zeit, wird als wichtige Datenquelle angesehen. Auf der Grundlage der gemäß der Erfindung erfassten Daten können beispielsweise Änderungen am Motormanagement des Kraftfahrzeugs vorgenommen werden, vorausschauende Regeleingriffe in Bezug auf die Geschwindigkeitsregelanlage ermittelt und durchgeführt werden, eine besonders gleichförmige Fortbewegung des Kraftfahrzeugs signalisiert werden und schließlich sogar Anreize für eine besonders gleichmäßige Fahrweise abgeleitet werden.

Eine besonders gleichmäßige Bewegung von Kraftfahrzeugen hat ganz erhebliche Vorteile. Zum einen lässt sich auf diese Weise ein geringerer Spritverbrauch erzielen, als dies bei einem Fahren mit periodischem Beschleunigen und Abbremsen der Fall sein kann. Außerdem ist es aus der Verkehrsforschung bekannt, dass eine gleichmäßige Geschwindigkeit der Kraftfahrzeuge die Gefahr einer Staubildung deutlich verringert. So ist die durchschnittliche Fahrgeschwindigkeit bei einem dichten, aber gleichmäßigen Verkehrsfluss deutlich höher, als dies bei einem vergleichbaren Verkehrsfluss der Fall ist, bei dem die einzelnen Fahrzeuge periodisch beschleunigen und abbremsen.

Einer der weiteren besonderen Aspekte der Erfindung ist darin zu sehen, dass die vorgeschlagene Lösung mit einfachen Mitteln zu realisieren ist. Dies umso mehr, da bereits eine Vielzahl von Kraftfahrzeugen mit einer Geschwindigkeitsregelanlage ausgestattet sind, sei es serienmäßig oder sei es im Rahmen einer Zusatzausstattung, so dass in aller Regel eine vorhandene Geschwindigkeitsregelanlage genutzt werden kann. Die Kosten für die verbleibenden Elemente der erfindungsgemäßen Vorrichtung sind gering, so dass in kostentechnischer Hinsicht beste Vorraussetzungen für eine großflächige Verbreitung der erfindungsgemäßen Vorrichtung gegeben sind.

Für den Einsatz der Vorrichtung sind im Wesentlichen die drei folgenden Varianten vorgesehen:

- Die Vorrichtung verfügt über einen Anschluss, an den der Status der Geschwindigkeitsregelanlage übertragen wird. Dies ermöglicht eine modulare und besonders preisgünstige Lösung, die auf einfache Weise insbesondere bei bestehenden Kraftfahrzeugen Geschwindigkeitsregelanlage nachgerüstet werden kann.

- Die Vorrichtung wird im Rahmen einer integrierten Lösung in einer Geschwindigkeitsregelanlage realisiert. Diese Lösung ist besonders kostengünstig und bietet sich in erster Linie bei Neufahrzeugen an.

- Für Fahrzeuge, die über keine Geschwindigkeitsregelanlage verfügen, kann die Vorrichtung um eine Geschwindigkeitsregelanlage erweitert werden. Zwar entstehen in diesem Zusammenhang höhere Kosten als bei den zuvor genannten Varianten, doch kann eine solche Vorrichtung dann in jedem beliebigen Kraftfahrzeug realisiert werden.

Unter dem Status der Geschwindigkeitsregelanlage wird im einfachsten Fall verstanden, dass eine Unterscheidung möglich ist, ob die Geschwindigkeitsregelanlage aktiviert ist, d.h. die Geschwindigkeit des Kraftfahrzeugs wird von der Geschwindigkeitsregelanlage gesteuert, oder ob sie deaktiviert ist, d.h. der Fahrer steuert die Geschwindigkeit des Kraftfahrzeugs.

Im Rahmen der weiteren Ausführungen in dieser Anmeldung werden aber noch weitere Aspekte aufgezeigt, die den Status der Geschwindigkeitsregelanlage darstellen können. Dabei werden insbesondere die eingestellte Geschwindigkeit erfasst und/oder eine Zuordnung zu bestimmten Geschwindigkeitsbereichen vorgenommen. Dem Konzept der Erfindung folgend kann jede Information in den Status einfließen, die direkt oder indirekt für die Feststellung bzw. die Bewertung einer gleichmäßigen Fortbewegung herangezogen werden kann.

Die Erfassung des Status erfolgt wiederholt, d.h. es wird nicht lediglich ein Status aufgenommen, sondern mehrere Status im Laufe der Zeit. Mit anderen Worten wird nicht lediglich der aktuelle Status festgehalten, sondern lässt sich aufgrund der in der Speichereinrichtung gespeicherten Daten mindestens ein Status aus der Vergangenheit ermitteln. Bevorzugt lassen sich mindestens zwei, besonders bevorzugt mindestens fünf, und insbesondere bevorzugt mindestens zehn Status aus der Vergangenheit abfragen.

Die Erfassung der Verwendung der Geschwindigkeitsregelanlage kann in vielfältiger Weise erfolgen. So kann sie sowohl periodisch erfolgen, insbesondere je vergangener Zeitdauer oder je durchfahrener Wegstrecke, oder kann insbesondere bei definierten Ereignissen stattfinden, bevorzugt wenn eine Änderung des Status auftritt.

Die Speicherung der einzelnen Status kann entweder fortlaufend linear erfolgen, d.h. es werden alle Daten ohne Überschreiben aufgezeichnet, oder findet insbesondere in einem physikalischen oder logischen Ringspeicher statt, d.h. nachdem der Ringspeicher einmal vollständig beschrieben wurde, wird die Speicherung derart fortgesetzt, dass die ältesten Daten mit den neuesten Daten überschrieben werden. Die Speichereinrichtung kann zudem derart ausgelegt sein, dass lediglich die letzten Daten über einen bestimmten Zeitraum oder entlang einer bestimmten Wegstrecke im Speicher behalten werden; ältere Daten werden bei diesem Konzept dann verworfen. Außerdem kann es nach Anwendungsfall vorgesehen werden, zum Beispiel bei einem Mietwagen, den gesamten Speicherinhalt zu löschen.

Wie bereits erwähnt, können die in der Speichereinrichtung hinterlegten Daten dann herangezogen werden, um eine gleichmäßige Bewegung des Kraftfahrzeugs festzustellen und/oder zu bewerten. Verbindet man nun zusätzlich die Feststellung, dass eine besonders gleichmäßige Bewegung des Kraftfahrzeugs vorliegt, mit einem Anreiz einen solchen Zustand zu erzielen, so bietet die erfindungsgemäße Vorrichtung eine besonders gute Grundlage, den Fahrstil der einzelnen Autofahrer im Sinne einer gleichmäßigen Fortbewegung des Fahrzeugs zu unterstützen, ohne dabei den Wunsch nach individueller Mobilität zu beeinträchtigen.

Die Erfassungseinrichtung ist dafür ausgebildet, den Status mit einer zugeordneten Weginformation zu speichern.

Dies ermöglicht eine verbesserte Auswertung der gespeicherten Daten, da nun nicht lediglich hinterlegt ist, wie oft der Status einen bestimmten Wert hatte, zum Beispiel aktiviert oder deaktiviert, sondern gleichzeitig noch festgehalten wird, an welchem Wegpunkt bzw. über welche Wegstrecke der entsprechende Status gegeben war. Die Weginformation kann sowohl von außerhalb der Vorrichtung von einem Weggeber ermittelt und über einen entsprechenden Anschluss der Vorrichtung zugeführt werden oder in der Vorrichtung selbst ermittelt werden.

Die Vorrichtung weist ferner eine Berechnungseinrichtung auf, die unter Einbeziehung der in der Speichereinrichtung gespeicherten Daten einen Ergebniswert berechnet, der eine Verwendung der Geschwindigkeitsregelanlage repräsentiert.

Dies ermöglicht es, trotz einer erheblichen Anzahl von gespeicherten Daten dennoch einen repräsentativen Ergebniswert zu ermitteln, der die Verwendung der Geschwindigkeitsregelanlage bzw. die Gleichmäßigkeit der Bewegung des Kraftfahrzeugs beschreibt. Dabei wird der Ergebniswert im Allgemeinen derart berechnet, dass Daten, die anzeigen, dass das Kraftfahrzeug zu einem gleichmäßigen Verkehrsfluss beigetragen hat (zum Beispiel Einhalten der Höchstgeschwindigkeit, häufige Verwendung der Geschwindigkeitsregelanlage, regelmäßiges Einhalten der Richtgeschwindigkeit), positiv bewertet werden, wohingegen Daten, die darauf hindeuten, dass das Kraftfahrzeug einen gleichmäßigen Verkehrsfluss behindert hat (zum Beispiel Überschreitung der Höchstgeschwindigkeit, seltene Verwendung der Geschwindigkeitsregelanlage), weniger positiv oder negativ berücksichtigt werden. Der Ergebniswert liefert daher auf einfache Weise eine prägnante Aussage darüber, wie stark ein Kraftfahrzeug zu einem gleichmäßigen Verkehrsfluss beigetragen hat.

Bei einer vorteilhaften Ausgestaltung der Erfindung ist die Erfassungseinrichtung dafür ausgebildet, den Status mit einer zugehörenden Zeitinformation zu speichern.

Diese Ausführungsform ermöglicht eine verbesserte Auswertung der gespeicherten Daten, da nun nicht lediglich hinterlegt ist, wie oft der Status einen bestimmten Wert hatte, zum Beispiel aktiviert oder deaktiviert, sondern gleichzeitig noch festgehalten wird, zu welcher Zeit bzw. über welche Zeitdauer der entsprechende Status gegeben war. Die Zeitinformation kann sowohl von außerhalb der Vorrichtung von einem Zeitgeber ermittelt und über einen entsprechenden Anschluss der Vorrichtung zugeführt werden oder in der Vorrichtung selbst ermittelt werden.

Bei einer weiteren vorteilhaften Ausgestaltung der Erfindung weist die Erfassungseinrichtung einen Zeitmesser auf, der als Zeitinformation die Zeitdauer ermittelt, über die ein im Wesentlichen gleichbleibender Status vorliegt.

Diese Ausgestaltung ermöglicht eine als besonders vorteilhaft angesehene Auswertung dahingehend, wie lange ein bestimmter Status der Geschwindigkeitsregelanlage gegeben war. So lässt sich zum Beispiel die Aussage treffen, dass während eines Beobachtungszeitraums, zum Beispiel eine Fahrt, der letzte Monat, oder die letzten 1.000 Kilometer, die Geschwindigkeitsregelanlage für eine bestimmte Zeitdauer oder bestimmte Zeitintervalle aktiviert war bzw. nicht aktiviert war.

Bevorzugt wird im Rahmen der Erfassung vorgesehen, dass geringfügige Abweichungen bezüglich des Status der Geschwindigkeitsregelanlage unbeachtet bleiben. D.h., wird die Geschwindigkeitsregelanlage beispielsweise kurzzeitig deaktiviert oder die eingestellte Geschwindigkeit nur minimal verringert, so wird dies als im Wesentlichen gleichbleibender Status verstanden und nicht als geänderter Status.

Bei einer weiteren vorteilhaften Ausgestaltung der Erfindung weist die Erfassungseinrichtung einen Wegmesser auf, der als Weginformation die Wegstrecke ermittelt, über die ein im Wesentlichen gleichbleibender Status vorliegt.

Diese Ausgestaltung ermöglicht eine als besonders vorteilhaft angesehene Auswertung dahingehend, über welche Wegstrecken ein bestimmter Status der Geschwindigkeitsregelanlage gegeben war. So lässt sich zum Beispiel die Aussage treffen, dass während eines Beobachtungszeitraums, zum Beispiel eine Fahrt, der letzte Monat, oder die letzten 1.000 Kilometer, die Geschwindigkeitsregelanlage an bestimmten Wegpunkten oder entlang bestimmter Wegstrecken aktiviert war bzw. nicht aktiviert war.

Bevorzugt wird im Rahmen der Erfassung auch hier vorgesehen, dass geringfügige Abweichungen bezüglich des Status der Geschwindigkeitsregelanlage unbeachtet bleiben.

Bei einer weiteren vorteilhaften Ausgestaltung der Erfindung beinhaltet der Status eine Information bezüglich der eingestellten Sollgeschwindigkeit der Geschwindigkeitsregelanlage.

Diese Ausgestaltung ermöglicht es in vorteilhafter Weise eine Aussage darüber treffen, über welche Zeitdauer welche Sollgeschwindigkeiten eingestellt waren bzw. in welche Geschwindigkeitsbereiche die eingestellten Sollgeschwindigkeiten fielen.

Bei einer weiteren vorteilhaften Ausgestaltung der Erfindung beinhaltet der Status eine Information bezüglich der aktuell befahrenen Verkehrswegart und/oder der aktuell zulässigen Höchstgeschwindigkeit.

Diese Ausgestaltung hat den Vorteil, dass der Status weitere Informationen enthält, die im Hinblick auf eine gleichmäßige Bewegung des Kraftfahrzeugs vorteilhaft ausgewertet werden können. Die Verkehrswegart soll insbesondere dahingehend verstanden werden, dass entschieden werden kann, ob sich das Kraftfahrzeug auf einer Autobahn, auf einer Landstraße oder innerhalb einer Stadt bewegt. Die Verkehrswegart kann insbesondere unter Verwendung einer Positionsermittlung durch Satellitennavigation und dem entsprechenden Abgleich mit vorhandenem Kartenmaterial durchgeführt werden. Dabei kann die Unterteilung der Verkehrswegarten auch feiner vorgenommen werden, zum Beispiel können auch Autostraßen, kleine Landstraßen oder Innenstadtbereiche gesondert erfasst werden, oder kann eine Unterteilung lediglich in Autobahnen und sonstige Straßen erfolgen.

Die Berücksichtigung der Verkehrswegart hat den Vorteil, dass die Verwendung der Geschwindigkeitsregelanlage in Bezug auf die jeweilige Verkehrswegart erfasst werden kann. Eine solche Unterscheidungsmöglichkeit wird als vorteilhaft angesehen, da die Verwendung einer Geschwindigkeitsregelanlage auf Autobahnen als besonders vorteilhaft angesehen wird, wohingegen die Verwendung einer Geschwindigkeitsregelanlage im innerstädtischen Verkehr eher schwer zu realisieren ist. Im Sinne eines gleichmäßigen Verkehrsflusses soll daher eine Verwendung der Geschwindigkeitsregelanlage auf einer Autobahn als gewünscht und unterstützenswert angesehen werden, wohingegen die Verwendung einer Geschwindigkeitsregelanlage in der Stadt weniger Beachtung findet.

Natürlich sind auch hier Abweichungen von dem allgemeinen Ansatz möglich, insbesondere wenn eine Geschwindigkeitsregelanlage mit einer automatischen Abstandsregelung gekoppelt ist, da eine derartige Kopplung auch die vorteilhafte Verwendung einer Geschwindigkeitsregelanlage im innerstädtischen Verkehr ermöglicht.

Die aktuell zulässige Höchstgeschwindigkeit kann dahingehend berücksichtigt werden, dass ein Überschreiten der Höchstgeschwindigkeit im Sinne eines gleichmäßigen Verkehrsflusses unerwünscht ist. In diesem Fall ist nämlich zu erwarten, dass das Kraftfahrzeug auf andere Fahrzeuge aufläuft bzw. diese überholen muss. Die zulässige Höchstgeschwindigkeit kann der Vorrichtung beispielsweise durch Sender übermittelt werden, die entlang der Straße oder in Verkehrsschildern angeordnet sind, oder kann wieder unter Verwendung der Satellitennavigation und dem Rückgriff auf vorhandenes Kartenmaterial ermittelt werden.

Bei einer weiteren vorteilhaften Ausgestaltung der Erfindung weist die Vorrichtung eine Sendeeinrichtung auf, die dafür ausgebildet ist, den Ergebniswert nach außen zu signalisieren.

Bei dieser Ausgestaltung lassen sich weitere Maßnahmen aus dem Ergebniswert ableiten. Dabei sind insbesondere folgende Maßnahmen denkbar:

- Der Ergebniswert wird an eine andere Einrichtung im Auto übermittelt. So ist es insbesondere denkbar, ein Motorenkennfeld oder Schaltwerte für eine Getriebeautomatik in Abhängigkeit davon zu optimieren, ob der Fahrer die Geschwindigkeitsregelanlage eher häufig oder eher selten verwendet.

- Der Ergebniswert wird an eine Anzeigeeinheit im Kraftfahrzeug gesendet. Auf diese Weise kann der Fahrer erkennen, ob er mit seinem Kraftfahrzeug aktuell bzw. im Laufe eines vorgegebenen Beobachtungszeitraums zu einem gleichmäßigen Verkehrsfluss beigetragen hat oder nicht. Zusätzlich oder alternativ kann bevorzugt auch vorgesehen werden, den Ergebniswert am Auto nach außen hin sichtbar anzuzeigen und so auf Kraftfahrer mit einem besonders gleichmäßigen Fahrstil hinzuweisen.

- Der Ergebniswert wird an mobile oder stationäre externe Empfänger gesendet. So kann beispielsweise Kraftfahrzeugen mit einem besonders guten Ergebniswert der Zugang zu einer besonderen Fahrspur, in eine besondere Verkehiszone oder zu besonderen Parkplätzen ermöglicht werden. Die jeweilige Berechtigung wird von den externen Empfängern geprüft.

Das Senden des Signals innerhalb des Kraftfahrzeugs findet bevorzugt kabelgebunden statt, insbesondere entlang eines bereits vorhandenen Kommunikationsbusses des Fahrzeugs. Dagegen wird die Verbindung zu den genannten externen Empfängern bevorzugt kabellos realisiert.

Bei einer weiteren bevorzugten Ausgestaltung der Erfindung ist die Berechnungseinrichtung dafür ausgebildet, bei der Berechnung des Ergebniswerts einen oder mehrere Werte aus der Gruppe bestehend aus Schadstoffklasse des Kraftfahrzeugs, Normverbrauch des Kraftfahrzeugs und $CO_2$-Emission des Kraftfahrzeugs zu berücksichtigen.

Diese Ausgestaltung ermöglicht in vorteilhafter Weise eine, zum Beispiel politisch gewünschte, Bevorzugung von Kraftfahrzeugen mit einer günstigen Umweltbilanz. So wird es Fahrern eines Kraftfahrzeugs mit günstiger Umweltbilanz ermöglicht, auch bei gleichem Fahrprofil einen besseren Ergebniswert zu erzielen als der Fahrer eines Kraftfahrzeugs mit einer schlechteren Umweltbilanz.

Bei einer weiteren vorteilhaften Ausgestaltung der Erfindung ist die Erfassungseinrichtung ferner dafür ausgebildet, Beschleunigungsvorgänge zu erfassen und ist die Berechnungseinrichtung dafür ausgebildet, bei der Berechnung des Ergebniswerts die erfassten Beschleunigungsvorgänge zu berücksichtigen.

Diese Ausgestaltung bietet eine weitere vorteilhafte Differenzierungsmöglichkeit hinsichtlich einer gleichmäßigen Bewegung des Kraftfahrzeugs, da eine geringe Anzahl von Beschleunigungsvorgängen für eine gleichmäßige Bewegung spricht, wohingegen viele Beschleunigungsvorgänge eine ungleichmäßige Fahrweise erkennen lassen. Die Erfassung der Beschleunigungsvorgänge wird dabei vorteilhafterweise mit der Erfassung der Verkehrswegart gekoppelt, da im Stadtverkehr eine Vielzahl von Beschleunigungsvorgängen unvermeidlich ist, wohingegen sie auf einer Autobahn größtenteils vermieden werden kann.

Bei einer weiteren vorteilhaften Ausgestaltung der Erfindung ist die Berechnungseinrichtung dafür ausgebildet, bei der Berechnung des Ergebniswerts aktuelle Daten gegenüber älteren Daten stärker zu gewichten.

Diese Ausgestaltung ermöglicht es, ein aktuell günstiges Fahrverhalten trotz eines schlechten Fahrverhaltens in der Vergangenheit mit einem guten Ergebniswert darzustellen, wohingegen ein in der Vergangenheit liegendes gutes Fahrverhalten bei einem aktuell schlechten Fahrverhalten zu einem schlechteren Ergebniswert führt. Die Abstufung in der Gewichtung kann variabel vorgenommen werden und kann auch einen Gewichtungsfaktor Null beinhalten, d.h. ältere Daten werden gar nicht berücksichtigt.

Die Aufgabe wird ferner durch ein Kraftfahrzeug mit einer zuvor beschriebenen Vorrichtung gelöst. Dabei ist es insbesondere vorteilhaft, wenn die Sendeeinrichtung in der Nähe des Tankeinfüllstutzens angeordnet ist. Damit ist es möglich, den Ergebniswert mittels der Sendeeinrichtung an einen Empfänger in der Zapfpistole oder in der Zapfsäule zu übertragen und beispielsweise bei einem besonders guten Ergebniswert eine Steuerersparnis bei dem getankten Kraftstoff vorzusehen. Dieses Konzept wird noch im Rahmen eines Ausführungsbeispiels näher erläutert werden.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung näher dargestellt und werden in der nachfolgenden Beschreibung näher erläutert. Es zeigen:

Figur 1    zeigt ein erstes Ausführungsbeispiel einer Vorrichtung für ein Kraftfahrzeug zur Erfassung der Verwendung einer Geschwindigkeitsregelanlage des Kraftfahrzeugs;

Figur 2    zeigt ein zweites Ausführungsbeispiel einer Vorrichtung für ein Kraftfahrzeug zur Erfassung der Verwendung einer Geschwindigkeitsregelanlage des Kraftfahrzeugs;

Figur 3    zeigt ein erstes Ausführungsbeispiel eines Kraftfahrzeugs mit einer erfindungsgemäßen Vorrichtung;

Figur 4    zeigt ein zweites Ausführungsbeispiel eines Kraftfahrzeugs mit einer erfindungsgemäßen Vorrichtung;

Figur 5    zeigt eine Detailansicht eines Innenspiegels eines Kraftfahrzeugs gemäß eines dritten Ausführungsbeispiels;

Figur 6    zeigt Ausführungsbeispiele beim Senden des Ergebniswerts nach außen; und

Figur 7    zeigt eine Detailansicht eines vierten Ausführungsbeispiels eines Kraftfahrzeugs mit einer erfindungsgemäßen Vorrichtung.

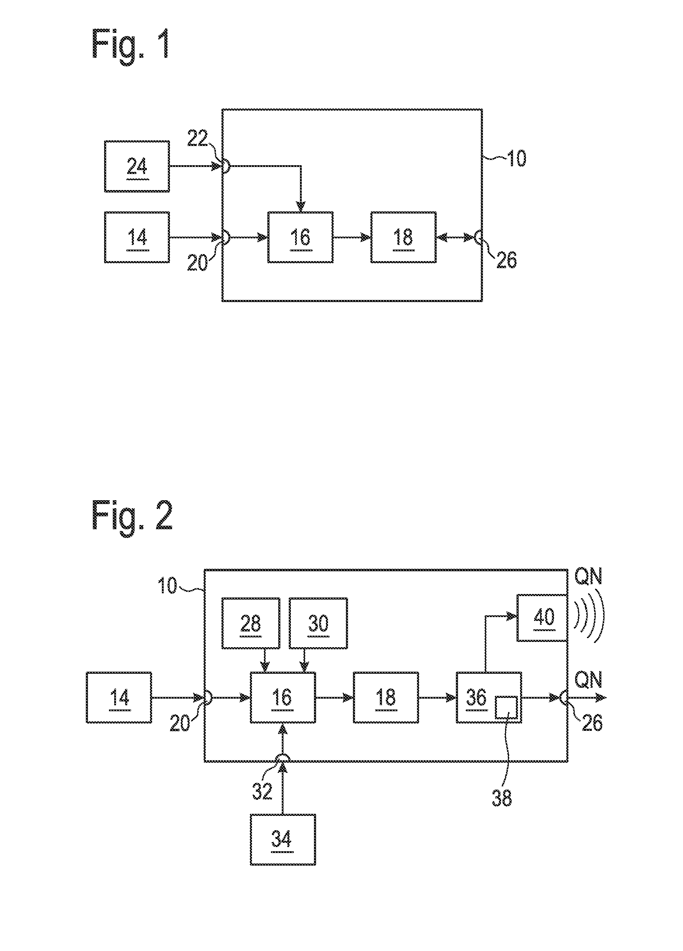

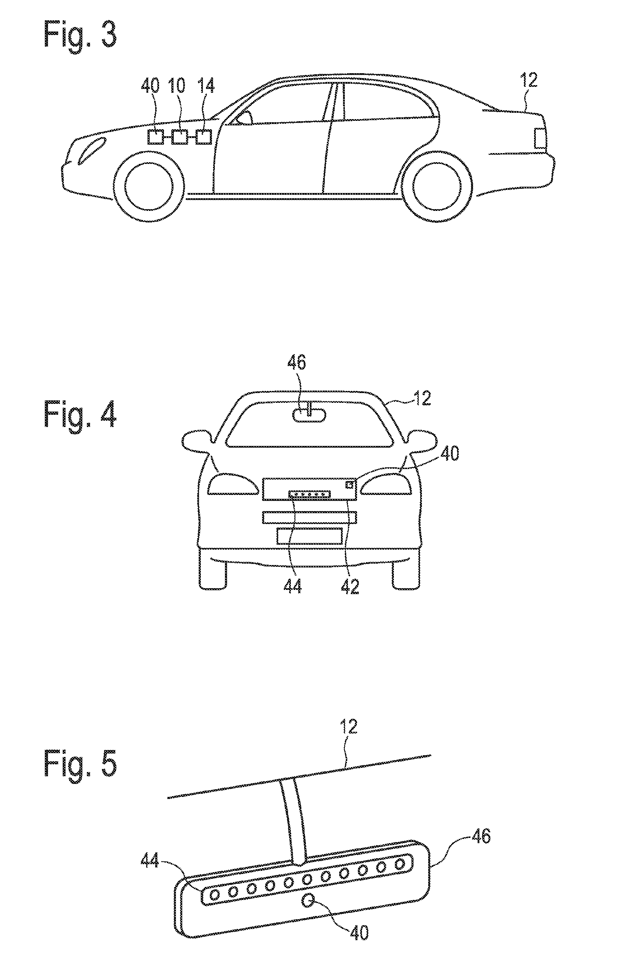

Figur 1 zeigt eine Vorrichtung 10 für ein Kraftfahrzeug 12 (siehe Figur 3) zur Erfassung der Verwendung einer Geschwindigkeitsregelanlage 14 des Kraftfahrzeugs 12. Die Vorrichtung 10 weist eine Erfassungseinrichtung 16 und eine Speichereinrichtung 18 auf. Die Erfassungseinrichtung 16 ist dafür ausgebildet, einen Status der Geschwindigkeitsregelanlage 14 zu erfassen und in der Speichereinrichtung 18 zu speichern.

Die Vorrichtung 10 weist einen ersten Anschluss 20 auf, an den von der Geschwindigkeitsregelanlage 14 der Status übermittelt wird. Die Vorrichtung 10 weist außerdem einen zweiten Anschluss 22 auf, an den von einem Zeitgeber 24 eine Zeitinformation übermittelt wird. Die Geschwindigkeitsregelanlage 14 und der Zeitgeber 24 werden hier als bereits vorhandene Bestandteile des Kraftfahrzeugs 12 angesehen. Es ist aber bei anderen, nicht gezeigten Ausführungsbeispielen vorgesehen, die Geschwindigkeitsregelanlage 14 und den Zeitgeber 24 als Bestandteil der Vorrichtung 10 auszugestalten.

Schließlich weist die Vorrichtung 10 einen dritten Anschluss 26 auf, über den die Speichereinrichtung 18 abgefragt werden kann. Der Aufbau der Vorrichtung 10 hinsichtlich des Zugriffs auf die Speichereinrichtung 18 kann in vielfältiger Weise realisiert werden. So ist es neben der gezeigten Variante, bei der die Speichereinrichtung 18 bevorzugt eine eigene Steuereinheit aufweist, auch möglich, eine separate Steuereinheit für die Speichereinrichtung 18 einzusetzen, oder eine Abfrage der Speichereinrichtung 18 über die Erfassungseinrichtung 16 vorzunehmen, die in diesem Fall dann eine weitere Aufgabe erfüllt.

Während des Betriebs des Kraftfahrzeugs 12 sendet die Geschwindigkeitsregelanlage 14 ihren Status an die Vorrichtung 10 oder fragt die Vorrichtung 10 den Status der Geschwindigkeitsregelanlage 14 ab. Dabei wird im Status die Information übermittelt, ob die Geschwindigkeitsregelanlage 14 aktiviert oder deaktiviert ist und bevorzugt, welche Sollgeschwindigkeit bei der Geschwindigkeitsregelanlage 14 eingestellt ist.

Bei einer bevorzugten Ausführungsform, die noch beschrieben wird, wird für eine Datenreduzierung und Vereinfachung der Auswertung ein Geschwindigkeitsbereich erfasst, zum Beispiel zwischen 100 km/h und 110 km/h, in den die gewählte Sollgeschwindigkeit fällt.

Der von der Erfassungseinrichtung 16 erfasste Status wird dann in der Speichereinrichtung 18 gespeichert. Über den dritten Anschluss 26 können dann die einzelnen Status individuell, in Teilen, in Gruppen oder vollständig ausgelesen werden.

Bei dem hier gezeigten Ausführungsbeispiel erhält die Erfassungseinrichtung 16 zusätzlich vom Zeitgeber 24 eine Zeitinformation, die mit dem Status gespeichert wird. So kann insbesondere auf einfache Weise festgehalten werden, zu welchen Zeiten welcher Status der Geschwindigkeitsregelanlage 14 vorlag.

In Figur 2 ist ein zweites Ausführungsbeispiel einer Vorrichtung 10 gezeigt. Die prinzipielle Funktionsweise entspricht der Funktionsweise der Vorrichtung 10 gemäß der Figur 1, so dass auf die dortigen Ausführungen verwiesen wird. Die wesentlichen Unterschiede zwischen der Vorrichtung 10 gemäß der Figur 2 und der Vorrichtung 10 gemäß der Figur 1 werden nun erläutert.

Zum einen ist festzustellen, dass die Vorrichtung 10 einen Zeitmesser 28 und einen Wegmesser 30 aufweist, wobei der Zeitmesser 28 und/oder der Wegmesser 30 auch in die Erfassungseinrichtung 16 integriert sein können. Der Zeitmesser 28 wird hier verwendet, um eine Zeitdauer zu ermitteln, über die ein im Wesentlichen gleichbleibender Status vorliegt. Der Wegmesser 30 wird verwendet, um eine Wegstrecke zu ermitteln, über die ein im Wesentlichen gleichbleibender Status vorliegt.

Was im Einzelnen unter "im Wesentlichen" verstanden werden soll, hängt von der jeweiligen gewünschten Genauigkeit ab. Insbesondere können absolute Geschwindigkeitsabweichungen in der Größenordnung von $\pm$ 15 km/h, bevorzugt $\pm$ 10 km/h und besonders bevorzugt $\pm$ 5 km/h, als im Wesentlichen gleichbleibender Status verstanden werden. Ferner können insbesondere relative Geschwindigkeitsabweichungen von $\pm$ 15 %, bevorzugt = 10 % und besonders bevorzugt $\pm$ 5 % als im Wesentlichen gleichbleibender Status verstanden werden. Schließlich können insbesondere Abweichungen über einen Zeitraum von 30 Sekunden, bevorzugt 20 Sekunden und besonders bevorzugt 10 Sekunden, noch als im Wesentlichen gleichbleibender Status verstanden werden.

Die Vorrichtung 10 weist einen vierten Anschluss 32 auf, an den von einem Satellitennavigationsgerät 34 zusätzliche Informationen übermittelt werden. Dazu kann insbesondere die Übermittlung der aktuell zulässigen Höchstgeschwindigkeit, und/oder der aktuell gefahrenen Verkehrswegart zählen. Diese Information steht dem Satellitennavigationsgerät 34 zur Verfügung, da es die aktuelle Position des Kraftfahrzeugs 12 mit vorhandenem Kartenmaterial abgleichen kann.

Der Speichereinrichtung 18 ist eine Berechnungseinrichtung 36 nachgeschaltet, die unter Einbeziehung der in der Speichereinrichtung 18 gespeicherten Daten, also den verschiedenen Status, möglicherweise in Verbindung mit entsprechenden Zeitinformationen und/oder Weginformationen, einen Ergebniswert QN berechnet, der eine Verwendung der Geschwindigkeitsregelanlage 14 repräsentiert. Der Ergebniswert QN kann auch als Bewertungsfaktor bezeichnet werden.

Bei der gezeigten Ausführungsform weist die Bewertungseinrichtung 36 einen nicht-flüchtigen Speicher 38 auf, in dem die Schadstoffklasse des Kraftfahrzeugs und die $CO_2$-Emission des Kraftfahrzeugs hinterlegt sind. Diese Informationen fließen in die Berechnung des Ergebniswerts QN ein.

Der Ergebniswert QN kann an den dritten Anschluss 26 und/oder an eine Sendeeinrichtung 40 übertragen werden, so dass der Ergebniswert QN nach außen, d.h. nach außerhalb der Vorrichtung 10, signalisiert werden kann. Bevorzugt können statt des Ergebniswerts QN auch andere Informationen aus der Vorrichtung 10 oder den daran angeschlossenen Komponenten ausgesendet werden. Bevorzugt ist es dabei, Informationen aus dem nicht-flüchtigen Speicher 38 und/oder aus der Speichereinrichtung 18 zu senden. Dabei können sowohl alle gespeicherten Informationen als auch Teile der gespeicherten Informationen ausgesendet werden.

Die Berechnung des Ergebniswerts QN kann in vielfältiger Weise durchgeführt werden, sofern dabei das Ziel der vorliegenden Erfindung beachtet wird, eine Verwendung der Geschwindigkeitsregelanlage 14 zu erfassen und in dem Ergebniswert QN zu repräsentieren. Dieser Anforderung kann beispielsweise bereits dadurch Genüge getan werden, indem man die Zeit mit aktivierter Geschwindigkeitsregelanlage 14 ins Verhältnis zur Gesamtzeit setzt. Je öfter die Geschwindigkeitsregelanlage 14 aktiviert wird, desto höher ist der Ergebniswert QN. Die Berechnung kann in analoger Weise auch für die Wegstrecke erfolgen. Außerdem können auch Zeitdauer und Wegstrecke kombiniert oder zueinander gewichtet bewertet werden.

Eine bevorzugte Möglichkeit, den Ergebniswert QN zu berechnen, wird nun erläutert. Dabei soll zunächst davon ausgegangen werden, dass ein Kraftfahrzeug insgesamt eine Wegstrecke von 800 Kilometern zurückgelegt hat und die in der Speichereinrichtung 18 hinterlegten Status zu folgender Informationsaufstellung geführt haben.

| Geschwindigkeitsregelanlage ein/aus | Wegstrecke $S_n$ [km] | Geschwindigkeit v [Stundenkilometer] | Wichtung $w_n$ |
|---|---|---|---|
| aus | 100 | | 0 |
| ein | 10 | > 140 | 1,5 |
| ein | 250 | 126-140 | 6 |
| ein | 300 | 11.6-1.25 | 10 |
| ein | 50 | 101-115 | 9 |
| ein | 50 | 81-100 | 8 |
| ein | 40 | 50-80 | 5 |

Um diese Daten in einem aussagekräftigen Ergebniswert QN darzustellen, wird es als vorteilhaft angesehen, den Ergebniswert QN gemäß folgender Formel zu berechnen:

$$QN = \frac{\sum_n (s_n \cdot w_n)}{\sum_n s_n}$$

Bezogen auf die beispielhaften Werte errechnet sich der Ergebniswert QN wie folgt:

$$QN = \frac{100 \cdot 0 + 10 \cdot 1,5 + 250 \cdot 6 + 300 \cdot 10 + 50 \cdot 9 + 50 \cdot 8 + 40 \cdot 5}{100 + 10 + 250 + 300 + 50 + 50 + 40}$$

und damit

$$QN = \frac{5565}{800} = 6,96$$

Die hier aufgezeigte Berechnung des Ergebniswerts QN berücksichtigt außerdem, dass bestimmte Geschwindigkeitsbereiche als mehr oder weniger vorteilhaft angesehen werden, so dass der Ergebniswert QN nicht nur durch eine verstärkte Nutzung der Geschwindigkeitsregelanlage 14, sondern auch durch ein Einstellen einer Sollgeschwindigkeit in bevorzugten Geschwindigkeitsbereichen vorgenommen wird.

Figur 3 zeigt ein erstes Ausführungsbeispiel eines Kraftfahrzeugs 12 mit der Geschwindigkeitsregelanlage 14, einer Vorrichtung 10 und einer Sendeeinrichtung 40. Die Arbeitsweise der Vorrichtung 10 und deren Zusammenspiel mit der Geschwindigkeitsregelanlage 14 und der Sendeeinrichtung 40 kann der Figur 2 entnommen werden.

Figur 4 zeigt ein zweites Ausführungsbeispiel eines Kraftfahrzeugs 12. Hier sind die Vorrichtung 10 und die Geschwindigkeitsregelanlage 14 nicht gezeigt. Es ist aber zu erkennen, dass die Sendeeinrichtung 40 am Kühlergrill 42 des Kraftfahrzeugs 12 befestigt ist. Diese Positionierung wird als vorteilhaft angesehen, da so auf einfache Weise das von der Sendeeinrichtung 40 erzeugte Signal bzw. der Ergebniswert QN in Fahrtrichtung ausgesandt werden können.

In dem Kühlergrill 42 ist ferner eine Anzeigeeinheit 44 integriert, mittels der der Ergebniswert QN nach außen angezeigt werden kann. Die Anzeige kann insbesondere durch eine Anzahl an LEDs erfolgen, wobei in Abhängigkeit von der Größe des Ergebniswerts QN eine entsprechende Anzahl an LEDs leuchtet. Die Anzeigeeinheit 44 kann mit der Vorrichtung 10 verbunden werden oder kann ein von der Vorrichtung 10 ausgesandtes Signal mit dem Ergebniswert QN empfangen. Je nach Anwendung kann die Anzeigeeinheit 44 auch im Inneren des Fahrzeugs vorgesehen sein oder auch innen und außen am Fahrzeug 12 angeordnet sein.

Eine weitere Ausgestaltung, die den Innenspiegel 46 des Fahrzeugs vorteilhaft verwendet, wird nun erläutert.

In der Figur 5 ist eine detailliertere Ansicht des Innenspiegels 46 eines Kraftfahrzeugs 12 gezeigt. Im Unterschied zu dem Kraftfahrzeug gemäß der Figur 4 ist hier aber die Anzeigeeinheit 44 in die Rückseite des Innenspiegels 46 integriert. Bevorzugt kann die Anzeigeeinheit 44 so ausgestaltet werden, dass sie auch auf der Vorderseite des Innenspiegels 46 schwach zu erkennen ist, ohne den Fahrer zu stören. Ferner ist die Sendeeinrichtung 40 hier an der Rückseite des Innenspiegels 46 angeordnet.

Die vorgeschlagene Lösung ist besonders kompakt, hat geringe Herstellungskosten und bietet sowohl bezüglich der Anzeige des Ergebniswerts QN als auch bezüglich der Positionierung der Sendeeinrichtung 40 erhebliche Vorteile.

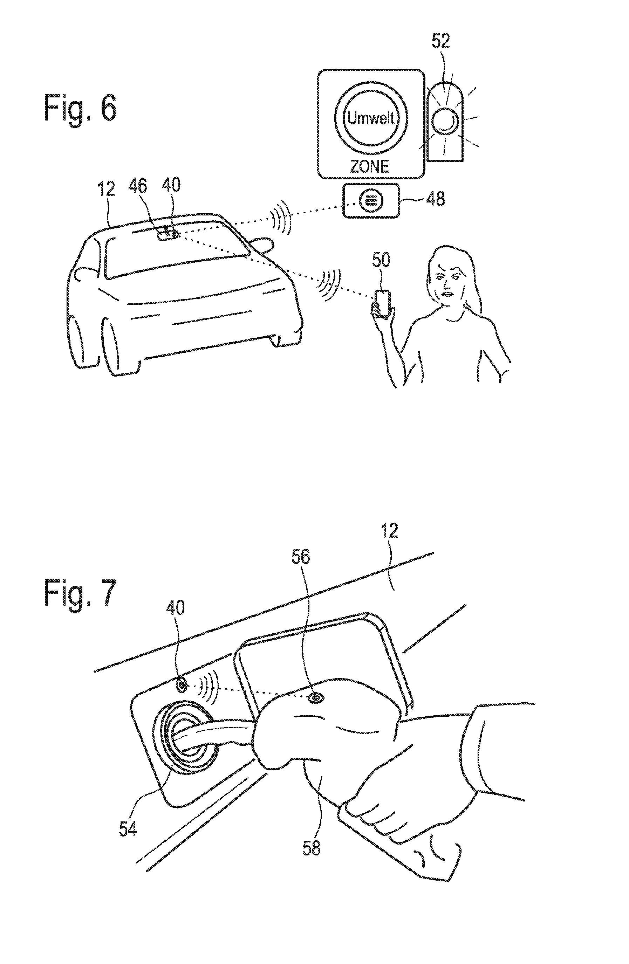

Die praktische Anwendung eines solchen Fahrzeugs 12 ist in der Figur 6 beispielhaft erläutert. Dabei weist das Fahrzeug 12 einen Innenspiegel 46 gemäß der Figur 5 auf.

Das Fahrzeug 12 sendet ein kodiertes oder unkodiertes Signal, insbesondere den Ergebniswert QN, an einen stationären Empfänger 48 und/oder an einen mobilen Empfänger 50. Die übermittelte Information kann beim Befahren von Umweltzonen Anwendung finden und/oder beispielsweise bei Smogalarm ein Befahren bestimmter Bereiche erlauben. Bei nicht ausreichendem Ergebniswert QN leuchtet beispielsweise eine Lampe 52 auf, um den Fahrzeugführer darauf aufmerksam zu machen, dass er eine Zone mit besonderen Benutzungsbedingungen unerlaubt befährt.

In der Figur 7 wird schließlich eine weitere Anwendung gezeigt, die auf der Grundlage der erfassten Daten bezüglich der Verwendung der Geschwindigkeitsregelanlage 14 realisiert werden kann. Dafür ist hier in der Nähe des Tankeinfüllstutzens 54 eine Sendeeinrichtung 40 angeordnet, die mit einer entsprechenden Empfangseinrichtung 56 an der gezeigten Zapfpistole 58 kommunizieren kann. Die Empfangseinrichtung 56 empfängt das kodierte oder unkodierte Signal, das von der Sendeeinrichtung 40 ausgesendet wird. Für den Fall, dass eine drahtlose Übertragung ungeeignet ist, kann auch eine physikalische Schnittstelle zwischen Kraftfahrzeug 12 und Zapfpistole 58 vorgesehen werden.

Die an die Zapfpistole 58 übermittelten Daten, insbesondere der Ergebniswert QN, können beispielsweise auf den Literpreis des getankten Kraftstoffes Einfluss nehmen und so einen Anreiz für die Erzielung eines möglichst hohen Ergebniswerts QN, d.h. für eine möglichst häufige Betätigung der Geschwindigkeitsregelanlage 14, bieten.

Die Erfindung zeigt damit eine völlig neue Möglichkeit auf, eine Einstellung der Geschwindigkeitsregelanlage zu speichern, dies wiederholt zu tun und ggf. diese Daten wie vorgeschlagen auszuwerten.

Damit lassen sich neben den erläuterten technischen Anwendungen, die von der Aufzeichnung der Status der Geschwindigkeitsregelanlage profitieren, auch erstmals eine fahrzeugspezifische Ermittlung einer gleichbleibenden Fortbewegung auf der Grundlage einer Geschwindigkeitsregelanlage erzielen und schließlich sogar verkehrspolitisch erwünschte Anreize für eine gleichmäßige Fahrweise ableiten. Damit leistet die Erfindung einen erheblichen Beitrag im Hinblick auf die kommenden Herausforderungen, die sich durch die steigende Verkehrsdichte und die steigenden Rohstoffkosten stellen.

**Patentansprüche**

1.   Vorrichtung (10) für ein Kraftfahrzeug (12) zur Erfassung der Verwendung einer Geschwindigkeitsregelanlage (14) des Kraftfahrzeugs (12), wobei die Vorrichtung (10) eine Erfassungseinrichtung (16) und eine Speichereinrichtung (18) aufweist, **dadurch gekennzeichnet, dass** die Erfassungseinrichtung (16) dafür ausgebildet ist, einen Status der Geschwindigkeitsregelanlage (14) zu erfassen und in der Speichereinrichtung (18) mit einer zugeordneten Weginformation als Daten zu speichern, und wobei die Vorrichtung ferner eine Berechnungseinrichtung (36) aufweist, die unter Einbeziehung der in der Speichereinrichtung (18) gespeicherten Daten einen Ergebniswert (QN) berechnet, der eine Verwendung der Geschwindigkeitsregelanlage (14) repräsentiert, wobei Daten, die eine häufige Verwendung der Geschwindigkeitsregelanlage (14) anzeigen, positiv bewertet werden, und Daten, die eine seltene Verwendung der Geschwindigkeitsregelanlage (14) anzeigen, weniger positiv oder negativ berücksichtigt werden, und ferner mit einer für einen Fahrer des Kraftfahrzeugs (12) erkennbaren Anzeigeeinrichtung, die dafür ausgebildet ist, den Ergebniswert zu empfangen und so anzuzeigen, dass der Fahrer erkennen kann, ob er mit seinem Kraftfahrzeug (12) aktuell oder im Laufe eines vorgegebenen Beobachtungszeitraums zu einem gleichmäßigen Verkehrsfluss beigetragen hat oder nicht.

2.   Vorrichtung nach Anspruch 1, wobei die Erfassungseinrichtung (16) dafür ausgebildet ist, den Status mit einer zugeordneten Zeitinformation zu speichern.

3.   Vorrichtung nach Anspruch 2, wobei die Erfassungseinrichtung (16) einen Zeitmesser (28) aufweist, der als Zeitinformation die Zeitdauer ermittelt, über die ein im Wesentlichen gleichbleibender Status vorliegt.

4.   Vorrichtung nach einem der vorhergehenden Ansprüche, wobei die Erfassungseinrichtung (16) einen Wegmesser (30) aufweist, der als Weginformation die Wegstrecke ermittelt, über die ein im Wesentlichen gleichbleibender Status vorliegt.

5. Vorrichtung nach einem der vorhergehenden Ansprüche, wobei der Status eine Information bezüglich der eingestellten Sollgeschwindigkeit der Geschwindigkeitsregelanlage (14) beinhaltet.

6. Vorrichtung nach einem der vorhergehenden Ansprüche, wobei der Status eine Information bezüglich der aktuell befahrenen Verkehrswegart und/oder der aktuell zulässigen Höchstgeschwindigkeit beinhaltet.

7. Vorrichtung nach Anspruch 6, wobei die Vorrichtung eine Sendeeinrichtung (40) aufweist, die dafür ausgebildet ist, den Ergebniswert (QN) nach außen zu signalisieren.

8. Vorrichtung nach einem der vorhergehenden Ansprüche, wobei die Berechnungseinrichtung (36) dafür ausgebildet ist, bei der Berechnung des Ergebniswerts (QN) einen oder mehrere Werte aus der Gruppe bestehend aus Schadstoffklasse des Kraftfahrzeugs (12), Normverbrauch des Kraftfahrzeugs (12) und $CO_2$-Emission des Kraftfahrzeugs (12) zu berücksichtigen.

9. Vorrichtung nach einem der vorhergehenden Ansprüche, wobei die Erfassungseinrichtung (16) ferner dafür ausgebildet ist, Beschleunigungsvorgänge zu erfassen und wobei die Berechnungseinrichtung (36) dafür ausgebildet ist, bei der Berechnung des Ergebniswerts (QN) die erfassten Beschleunigungsvorgänge zu berücksichtigen.

10. Vorrichtung nach einem der vorhergehenden Ansprüche, wobei die Berechnungseinrichtung (36) dafür ausgebildet ist, bei der Berechnung des Ergebniswerts (QN) aktuelle Daten gegenüber älteren Daten stärker zu gewichten.

11. Kraftfahrzeug (12) mit einer Vorrichtung (10) nach einem der vorhergehenden Ansprüche.

12. Kraftfahrzeug nach Anspruch 11, wobei die Vorrichtung (10) nach Anspruch 8 ausgebildet ist und die Sendeeinrichtung (40) in der Nähe des Tankeinfüllstutzens (54) angeordnet ist.

13. Verfahren zur Erfassung der Verwendung einer Geschwindigkeitsregelanlage (14) eines Kraftfahrzeugs (12) mit den folgenden Schritten:

- Erfassen eines Status der Geschwindigkeitsregelanlage (14),
- Speichern des Status mit einer zugeordneten Weginformation als Daten,
- Berechnen eines Ergebniswerts (QN) unter Einbeziehung der gespeicherten Daten, der eine Verwendung der Geschwindigkeitsregelanlage (14) repräsentiert, wobei Daten, die eine häufige Verwendung der Geschwindigkeitsregelanlage (14) anzeigen, positiv bewertet werden, und Daten, die eine seltene Verwendung der Geschwindigkeitsregelanlage (14) anzeigen, weniger positiv oder negativ berücksichtigt werden,
- Senden des Ergebniswerts an eine für einen Fahrer des Kraftfahrzeugs (12) erkennbare Anzeigeeinheit im Kraftfahrzeug (12), und
- Anzeigen des Ergebniswerts, so dass der Fahrer erkennen kann, ob er mit seinem Kraftfahrzeug (12) aktuell oder im Laufe eines vorgegebenen Beobachtungszeitraums zu einem gleichmäßigen Verkehrsfluss beigetragen hat oder nicht.

**Claims**

1. Apparatus (10) for a vehicle (12) for acquiring the use of a cruise control unit (14) of the vehicle 12, wherein the apparatus (10) comprises an acquisition unit (16) and a memory unit (18), **characterized in that** the acquisition unit (16) is configured to acquire a status of the cruise control unit (14) and to store it as data in the memory unit (18) along with a corresponding way information, and wherein the apparatus further comprises a calculation unit (36) which calculates a result value (QN) representing a use of the cruise control unit (14) taking into account the data stored in the memory unit (18), wherein data indicating a frequent use of the cruise control unit (14) is rated positively and wherein data indicating an infrequent use of the cruise control unit (14) is rated less positive or negative, and further comprising a display unit observable by a driver of the vehicle (12) which is configured to receive the result value and to display it such that the driver can observe whether he has, currently or during a predetermined monitoring duration, contributed with his vehicle (12) to a steady traffic flow or not.

**2.** Apparatus of claim 1, wherein the acquisition unit (16) is configured to store the status with a corresponding time information.

**3.** Apparatus of claim 2, wherein the acquisition unit (16) comprises a time measuring device (28) which determines the time duration for which a substantially constant status is given as the time information.

**4.** Apparatus of any preceding claim, wherein the acquisition unit (16) comprises a way measuring device (30) which determines the length of the way for which a substantially constant status is present as the way information.

**5.** Apparatus of any preceding claim, wherein the status comprises information regarding the set target speed of the cruise control unit (14).

**6.** Apparatus of any preceding claim, wherein the status comprises information regarding the currently used type of road and/or the currently allowed maximum speed.

**7.** Apparatus of claim 6, wherein the apparatus comprises a sending unit (40) which is configured to signal the result value (QN) to the outside.

**8.** Apparatus of any preceding claim, wherein the calculation unit (36) is configured to take into account, when calculating the result value (QN), one or more values selected from the group consisting of emission class of the vehicle (12), standard fuel consumption of the vehicle (12) and $CO_2$-emission of the vehicle (12).

**9.** Apparatus of any preceding claim, wherein the acquisition unit (16) is further configured to detect acceleration processes and wherein the calculation unit (36) is configured to take into account the detected acceleration processes for calculating the result value (QN).

**10.** Apparatus of any preceding claim, wherein the calculation unit (36) is configured to assign a higher weight to current data in comparison to older data when calculating the result value (QN).

**11.** Vehicle (12) comprising an apparatus (10) according to any preceding claim.

**12.** Vehicle of claim 11, wherein the apparatus (10) is configured according to claim 8 and wherein the sending unit (40) is arranged close to the filler piece (54) of the tank.

**13.** Method for acquiring the use of a cruise control unit (14) of vehicle (12) with the steps of:

- acquiring a status of the cruise control unit (14),
- storing the status together with a corresponding way information as data,
- calculating a result value (QN) taking into account the stored data, the result value representing a use of the cruise control unit (14), wherein data indicating a frequent use of the cruise control unit (14) is rated positive and data indicating an infrequent use of the cruise control unit is rated less positive or negative,
- sending the result value to a display unit in the vehicle (12) observable by the driver, and
- displaying the result value so that the driver can observe whether he has, currently or during a predetermined monitoring duration, contributed with his vehicle (12) to a steady traffic flow or not.

**Revendications**

**1.** Dispositif (10) pour un véhicule automobile (12) destiné à la détermination de l'utilisation d'une installation de réglage de la vitesse (14) du véhicule automobile (12), le dispositif (10) comportant un dispositif de détermination (16) et un dispositif de mémoire (18), **caractérisé en ce que** le dispositif de détermination (16) est réalisé pour déterminer un état de l'installation de réglage de la vitesse (14) et pour le mémoriser sous forme de données dans le dispositif de mémoire (18) avec une information de voie associée et le dispositif comportant en outre un dispositif de calcul (36) calculant une valeur de résultat (QN) en intégrant les données mémorisées dans le dispositif de mémoire (18), ladite valeur représentant une utilisation de l'installation de réglage de la vitesse (14), les données indiquant une utilisation fréquente de l'installation de réglage de la vitesse (14) étant analysées positivement et les données indiquant une utilisation rare de l'installation de réglage de la vitesse (14) étant prises en compte moins positivement ou négativement et en outre avec un dispositif d'affichage reconnaissable pour un conducteur du véhicule automobile (12) et réalisé pour recevoir et afficher de telle sorte la valeur de résultat que le conducteur puisse reconnaître s'il a contribué ou non avec son véhicule automobile (12), actuellement ou au cours d'une durée d'observation prédéfinie, à un flux de circulation régulier.

**2.** Dispositif selon la revendication 1, le dispositif de détermination (16) étant réalisé pour mémoriser l'état avec une information de temps associée.

**3.** Dispositif selon la revendication 2, le dispositif de détermination (16) comportant un système de mesure de temps (28) calculant sous la forme d'une information de temps la durée d'un état pour l'essentiel constant.

**4.** Dispositif selon l'une quelconque des revendications précédentes, le dispositif de détermination (16) comportant un système de mesure de voie (30) calculant sous la forme d'une information de voie le tronçon de voie sur lequel l'état est pour l'essentiel constant.

**5.** Dispositif selon l'une quelconque des revendications précédentes, l'état contenant une information par rapport à la vitesse théorique réglée de l'installation de réglage de la vitesse (14).

**6.** Dispositif selon l'une quelconque des revendications précédentes, l'état contenant une information par rapport au type de voie de circulation actuellement emprunté et/ou à la vitesse maximale actuellement autorisée.

**7.** Dispositif selon la revendication 6, le dispositif comportant un dispositif d'envoi (40) réalisé pour signaler la valeur de résultat (QN) vers l'extérieur.

**8.** Dispositif selon l'une quelconque des revendications précédentes, le dispositif de calcul (36) étant réalisé pour prendre en compte, dans le calcul de la valeur de résultat (QN), une ou plusieurs valeurs appartenant au groupe composé de la catégorie de niveau polluant du véhicule automobile (12), la consommation normale du véhicule automobile (12) et l'émission de $CO_2$ du véhicule automobile (12).

**9.** Dispositif selon l'une quelconque des revendications précédentes, le dispositif de détermination (16) étant en outre réalisé pour déterminer les processus d'accélération et le dispositif de calcul (36) étant réalisé pour prendre en compte, dans le calcul de la valeur de résultat (QN), les processus d'accélération déterminés.

**10.** Dispositif selon l'une quelconque des revendications précédentes, le dispositif de calcul (36) étant réalisé pour pondérer plus fortement les données actuelles par rapport aux données plus anciennes dans le calcul de la valeur de résultat (QN).

**11.** Véhicule automobile (12) équipé d'un dispositif (10) selon l'une quelconque des revendications précédentes.

**12.** Véhicule automobile selon la revendication 11, le dispositif (10) étant réalisé selon la revendication 8 et le dispositif d'envoi (40) étant disposé à proximité du raccord de remplissage de réservoir (54).

**13.** Procédé destiné à la détermination de l'utilisation d'une installation de réglage de la vitesse (14) d'un véhicule automobile (12) avec les étapes suivantes :

  - détermination d'un état de l'installation de réglage de la vitesse (14) ;
  - mémorisation de l'état avec une information de voie associée sous forme de données ;
  - calcul d'une valeur de résultat (QN) en intégrant les données mémorisées représentant une utilisation de l'installation de réglage de la vitesse (14), les données indiquant une utilisation fréquente de l'installation de réglage de la vitesse (14) étant analysées positivement et les données indiquant une utilisation rare de l'installation de réglage de la vitesse (14) étant prises en compte moins positivement ou négativement ;
  - envoi de la valeur de résultat à une unité d'affichage du véhicule automobile (12) reconnaissable pour un conducteur du véhicule automobile (12) ; et
  - affichage de la valeur de résultat, de sorte que le conducteur puisse reconnaître s'il a contribué ou non avec son véhicule automobile (12), actuellement ou au cours d'une durée d'observation prédéfinie, à un flux de circulation régulier.

Fig. 1

Fig. 2

Fig. 3

Fig. 4

Fig. 5

Fig. 6

52

12 46 40

Umwelt

ZONE

48

50

Fig. 7

56

12

40

54

58

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6134489 A
- US 6092021 A
- US 20020022920 A1
- WO 2007139493 A1